# EUROPEAN PATENT APPLICATION

(11) **EP 4 349 479 A1**
(43) Date of publication of application: **10.04.2024**
(21) Application number: 22811121.7
(22) Date of filing: 27.04.2022
(51) Int. Cl.: B01J 23/63, B01D 53/94, B01J 32/00, F01N 3/10

(54) **EXHAUST GAS PURIFICATION CATALYST**

(30) Priority: 28.05.2021 JP 2021090349
(71) Applicant: CATALER CORPORATION, Kakegawa-shi, Shizuoka 437-1492 (JP)
(72) Inventor: INADA, Naruya, Kakegawa-shi, Shizuoka 437-1492 (JP); OISHI, Shunsuke, Kakegawa-shi, Shizuoka 437-1492 (JP); TOGASHI, Hiromi, Kakegawa-shi, Shizuoka 437-1492 (JP); SATO, Masanao, Kakegawa-shi, Shizuoka 437-1492 (JP); UCHIDA, Kento, Kakegawa-shi, Shizuoka 437-1492 (JP)
(74) Representative: Ricker, Mathias
(86) International application number: PCT/JP2022/019115
(87) International publication number: WO 2022/249847

(57) **Abstract**

An exhaust gas purification catalyst 100 comprises: a complex oxide carrier 110 including an OSC material 111 and a first alkaline earth metal oxide 112; and a second alkaline earth metal oxide 120 supported on the complex oxide carrier 110.

## Description

### FIELD

The present invention relates to an exhaust gas purification catalyst.

### BACKGROUND

Nitrogen oxides (NOₓ), carbon monoxide (CO), and hydrocarbons (HC) are contained in exhaust gases from internal combustion engines such as automobile engines. These exhaust gases are purified by exhaust gas purification catalysts that oxidize CO and HC and reduce NOx, and are then released into the atmosphere.

Regarding the three components of CO, HC, and NOx contained in exhaust gases, the emissions weight per unit driving distance of an automobile is regulated in each country from the viewpoint of mitigating air pollution.

Exhaust gas regulations have been tightening year after year. Currently, the LEV III regulations are applied in the United States, and the Euro 6 standards are applied in Europe. Europe is expected to transition to the Euro 7 standards in the near future.

In the Euro 7 standards, for example, a decrease in NOx emissions in cold region such as at engine start-up is required. The exhaust gas atmosphere at engine start-up is in a rich to stoichiometric range. Therefore, decreasing NOx emissions in cold region using NOx purification techniques of the prior art that assumes a lean-burn engine is difficult.

As a NOx emissions decreasing technique of the prior art, for example, PTL 1 discloses an exhaust gas purification catalyst comprising
a lower catalyst layer containing a first composite oxide comprising Ce and Zr and Pd supported on the first composite oxide, and
an upper catalyst layer containing a second composite oxide comprising Ce and Zr and Rh supported on the second composite oxide, wherein an alkaline earth metal selected from Ca, Sr, and Mg forms a solid solution with at least one of the first composite oxide and the second composite oxide.

PTL 1 describes that a solid solution of an alkaline earth metal in a composite oxide improves the NOx adsorption characteristics of the composite oxide.

PTL 2 discloses a redox catalyst composed of palladium and an alkaline earth metal supported on an oxide having oxygen storage/release ability.

PTL 2 describes that by configuring the catalyst as described above, the alkaline earth metal is preferably involved in NOx adsorption or reaction.

### [CITATION LIST]

### [PATENT LITERATURE]

[PTL 1] Japanese Unexamined Patent Publication (Kokai) No. 2010-119994
[PTL 2] Japanese Unexamined Patent Publication (Kokai) No. 2001-198461

### SUMMARY

### [TECHNICAL PROBLEM]

PTL 1 and 2 described above both belong to exhaust gas purification catalysts of the prior art, and the NOx adsorption amount in cold region, such as at engine start-up, is insufficient.

The present invention has been made in view of the above circumstances, and has an object of providing an exhaust gas purification catalyst having a large NOx adsorption amount in cold region and decreased NOx emissions in cold region.

### [SOLUTION TO PROBLEM]

The present invention is as follows.

«Aspect 1» An exhaust gas purification catalyst, comprising
   a composite oxide carrier comprising an OSC material and a first alkaline earth metal oxide, and
   a second alkaline earth metal oxide supported on the composite oxide carrier.
«Aspect 2» The exhaust gas purification catalyst according to Aspect 1, wherein the first alkaline earth metal oxide is magnesium oxide.
«Aspect 3» The exhaust gas purification catalyst according to Aspect 1 or 2, wherein the second alkaline earth metal oxide is one or more selected from the group consisting of magnesium oxide, barium oxide, and strontium oxide.
«Aspect 4» The exhaust gas purification catalyst according to any one of Aspects 1 to 3, wherein the OSC material comprises a cerium-zirconium composite oxide.
«Aspect 5» The exhaust gas purification catalyst according to any one of Aspects 1 to 4, wherein the composite oxide carrier further comprises alumina.
«Aspect 6» The exhaust gas purification catalyst according to any one of Aspects 1 to 5, wherein an amount of the first alkaline earth metal oxide, when a total mass of the composite oxide carrier is 100% by mass, is 0.1% by mass or greater and 20% by mass or less.
«Aspect 7» The exhaust gas purification catalyst according to any one of Aspects 1 to 6, wherein a supported amount of the second alkaline earth metal oxide, when a mass of the composite oxide carrier is 100% by mass, is 0.5% by mass or greater and 25% by mass or less.
«Aspect 8» The exhaust gas purification catalyst according to any one of Aspects 1 to 7, further comprising a noble metal supported on the composite oxide carrier.
«Aspect 9» The exhaust gas purification catalyst according to Aspect 8, wherein the noble metal is one or more selected from the group consisting of platinum, palladium, and rhodium.
«Aspect 10» The exhaust gas purification catalyst according to Aspect 8 or 9, wherein a supported amount of the noble metal, when a mass of the composite oxide carrier is 100% by mass, is 0.1% by mass or greater and 15% by mass or less.
«Aspect 11» An exhaust gas purification catalytic device, comprising a substrate and a coating layer on the substrate, wherein
   the coating layer comprises an exhaust gas purification catalyst according to any one of Aspects 1 to 10.

### [ADVANTAGEOUS EFFECTS OF INVENTION]

The exhaust gas purification catalyst of the present invention has a large NOx adsorption amount in cold region and decreased NOx emissions in cold region.

### BRIEF DESCRIPTION OF DRAWINGS

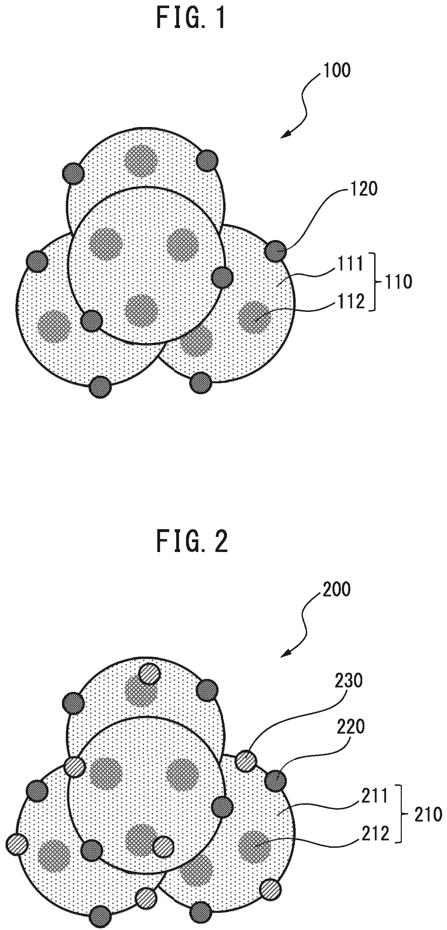

FIG. 1 is a conceptual diagram for describing an example of a configuration of the exhaust gas purification catalyst of the present invention.
FIG. 2 is a conceptual diagram for describing another example of a configuration of the exhaust gas purification catalyst of the present invention.

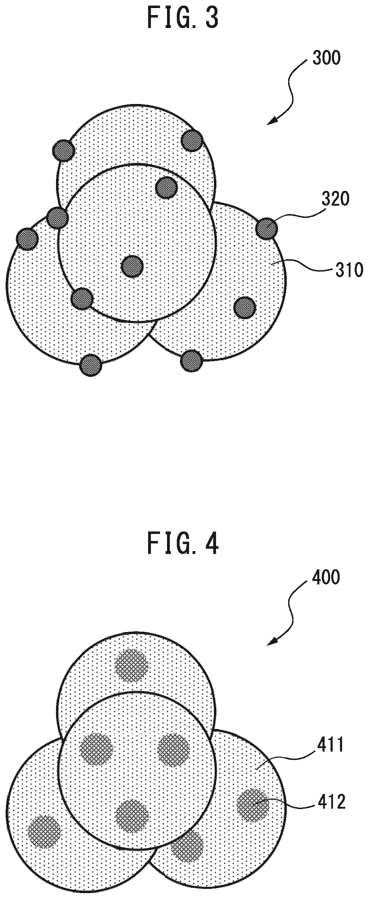

FIG. 3 is a conceptual diagram for describing an example of a configuration of an exhaust gas purification catalyst in the prior art.
FIG. 4 is a conceptual diagram for describing another example of a configuration of an exhaust gas purification catalyst in the prior art.
FIG. 5 is a Mg mapping obtained by EPMA analysis of the exhaust gas purification catalyst of Example 1.
FIG. 6 is a Mg mapping obtained by EPMA analysis of the exhaust gas purification catalyst of Comparative Example 1.
FIG. 7 is a Mg mapping obtained by EPMA analysis of the exhaust gas purification catalyst of Comparative Example 2.
FIG. 8 is a Ba mapping obtained by EPMA analysis of the exhaust gas purification catalyst of Comparative Example 3.

### DESCRIPTION OF EMBODIMENTS

### <<Exhaust gas purification catalyst>>

The exhaust gas purification catalyst of the present invention comprises
a composite oxide carrier comprising an OSC material and a first alkaline earth metal oxide, and
a second alkaline earth metal oxide supported on the above composite oxide carrier.

In the exhaust gas purification catalyst of the present invention, a noble metal may be further supported on the above composite oxide carrier with the second alkaline earth metal oxide.

In the exhaust gas purification catalyst of the present invention, the composite oxide carrier comprises an OSC material, for example, ceria. The exhaust gas atmosphere at engine start-up (in cold state) is in the rich to stoichiometric range. Thus, it is considered that an OSC material such as ceria is in a reduced state and an oxygen-deficient state at engine start-up. By including a composite oxide carrier containing an OSC material in an oxygen-deficient state at engine start-up in the exhaust gas purification catalyst of the present invention, the number of NOx adsorption sites in cold state is increased.

In the exhaust gas purification catalyst of the present invention, the composite oxide carrier further comprises a first alkaline earth metal oxide. As a result, the amount of basic sites in the composite oxide carrier is increased and the number of NOx adsorption sites is increased. In addition, the composite oxide carrier comprises divalent alkaline earth metal ions, thereby increasing the amount of oxygen vacancies in an OSC material, for example, ceria (an oxide of tetravalent cerium) and further increasing NOx adsorption sites in cold state.

In the exhaust gas purification catalyst of the present invention, a second alkaline earth metal oxide is supported on the composite oxide carrier. The second alkaline earth metal oxide has a function of adsorbing and retaining (storing) NOx.

In the exhaust gas purification catalyst of the present invention, NOx adsorption sites in the composite oxide carrier and NOx storage sites consisting of the second alkaline earth metal oxide are located in close proximity. As a result, in the exhaust gas purification catalyst of the present invention, the process from NOx adsorption to storage proceeds smoothly and quickly.

According to investigations by the present inventors, it was confirmed that when a composite oxide carrier comprises a first alkaline earth metal oxide, supporting rate of a second alkaline earth metal oxide is improved and dispersibility of the second alkaline earth metal oxide on the composite oxide carrier surface is improved. It was presumed that these phenomena were due to an interaction between the first alkaline earth metal oxide in the composite oxide carrier and the supported second alkaline earth metal oxide. Surprisingly, it was confirmed that these phenomena occur even when the types of the first alkaline earth metal oxide and the second alkaline earth metal oxide are different.

The exhaust gas purification catalyst of the present invention, coupled with the factors described above, exhibits an improved NOx adsorption amount in cold state.

### <Composite oxide carrier>

The composite oxide carrier of the exhaust gas purification catalyst of the present invention comprises an OSC material and a first alkaline earth metal oxide.

### (OSC material)

The composite oxide carrier of the exhaust gas purification catalyst of the present invention comprises an OSC material. "OSC" is an abbreviation for "Oxygen Storage Capacity" or "Oxygen Storage/release Capacity" and means an "oxygen storage/release ability". "OSC material" means a "material having an oxygen storage/release ability".

The OSC material is, for example, ceria (CeO₂). Ceria as an OSC material is a concept that includes ceria which constitutes a composite oxide of cerium and another metal, in addition to ceria present as a single type in the composite oxide carrier.

When the OSC material is ceria which constitutes a composite oxide of cerium and another metal, the composite oxide may be, for example, a cerium-zirconium composite oxide. When ceria is present as a cerium-zirconium composite oxide, the amount of oxygen vacancies in ceria in the rich to stoichiometric region is increased, and as a result, the number of NOx adsorption sites in the composite oxide carrier in cold state is further increased.

The particle size of the composite oxide carrier may be appropriately set according to intended use. The particle size of the composite oxide carrier can be exemplified in the range of, for example, 1 µm or more and 100 µm or less. The particle size of the composite oxide carrier is a particle size corresponding to 50% cumulative on the small particle-size side in the volume frequency distribution on a volume basis, determined by image processing of an observation image obtained by observing a cross-section of the catalyst with an electron microscope. The image processing of an observation image from an electron microscope may be carried out by, for example, the public-domain image analysis software "ImageJ".

The ceria content in the cerium-zirconium composite oxide, as a ratio of the mass of the cerium atom amount in the composite oxide expressed in terms of ceria (Ce₂O₃) to the total mass of the composite oxide, may be 5% by mass or greater, 10% by mass or greater, 15% by mass or greater, or 20% by mass or greater, and may be 50% by mass or less, 45% by mass or less, 40% by mass or less, 35% by mass or less, 30% by mass or less, or 25% by mass or less.

In order to ensure a sufficient number of NOx adsorption sites in cold state, the amount of OSC material contained in the composite oxide carrier, when the total mass of the composite oxide carrier is 100% by mass, may be 5% by mass or greater, 7.5% by mass or greater, 15% by mass or greater, or 20% by mass or greater. In order to benefit from the composite oxide comprising an additional component, the amount of OSC material contained in the composite oxide carrier, when the total mass of the composite oxide carrier is 100% by mass, may be 50% by mass or less, 45% by mass or less, 40% by mass or less, 35% by mass or less, 30% by mass or less, or 25% by mass or less.

The OSC amount (ceria amount) when the OSC material is ceria which constitutes a composite oxide of cerium and another metal is an amount expressed as the amount of cerium atoms in the composite oxide in terms of ceria (Ce₂O₃).

### (First alkaline earth metal oxide)

The composite oxide carrier of the exhaust gas purification catalyst of the present invention comprises a first alkaline earth metal oxide.

The "alkaline earth metal" in the present specification is a concept including beryllium (Be) and magnesium (Mg), in addition to calcium (Ca), strontium (Sr), barium (Ba), and radium (Ra) (the same for the second alkaline earth metal described below).

The first alkaline earth metal oxide contained in the composite oxide carrier of the exhaust gas purification catalyst of the present invention may be, for example, one or more selected from magnesium oxide, calcium oxide, and strontium oxide, and may be magnesium oxide in particular.

The first alkaline earth metal oxide may be present as a single type of alkaline earth metal oxide in the composite oxide carrier, or may be formed as a solid solution with an OSC material or a composite oxide comprising an OSC material (for example, a cerium-zirconium composite oxide).

The amount of the first alkaline earth metal oxide contained in the composite oxide carrier, when the total mass of the composite oxide carrier is 100% by mass, may be 0.1% by mass or greater, 0.5% by mass or greater, 1.0% by mass or greater, 2.0% by mass or greater, 3.0% by mass or greater, or 4.0% by mass or greater, from the viewpoint of sufficiently increasing the number of NOx adsorption sites in the composite oxide carrier. In order to benefit from the composite oxide comprising an additional component, the amount of the first alkaline earth metal oxide, when the total mass of the composite oxide carrier is 100% by mass, may be 20% by mass or less, 15% by mass or less, 12% by mass or less, 10% by mass or less, or 8% by mass or less.

The amount of the first alkaline earth metal oxide when the first alkaline earth metal oxide is formed as a solid solution with an OSC material or a composite oxide comprising an OSC material is an amount expressed as the amount of the first alkaline earth metal in the solid solution in terms of oxide. The amount of ceria as an OSC material is expressed as CeO₂.

### (Optional component)

The composite oxide may comprise an optional component in addition to the OSC material and the first alkaline earth metal oxide described above.

As described above, since the OSC material in the composite oxide may be present as, for example, ceria in a cerium-zirconium composite oxide, the composite oxide may comprise zirconia. In addition, the composite oxide may comprise one or more selected from rare earth metal oxides other than ceria, in addition to alumina, silica, and titania. When the composite oxide comprises two or more of these oxides, the two or more oxides may be present as individual oxides, or may be present as a composite oxide.

As described above, by including zirconia in the composite oxide, the amount of oxygen vacancies in the OSC material in the rich to stoichiometric region can be increased, and the number of NOx adsorption sites in the composite oxide carrier in cold state is further increased.

The amount of zirconia in the composite oxide, when the total mass of the composite oxide carrier is 100% by mass, may be 20% by mass or greater, 30% by mass or greater, 40% by mass or greater, 50% by mass or greater, 60% by mass or greater, or 65% by mass or greater, from the viewpoint of sufficiently demonstrating the above effect. In order to benefit from the composite oxide comprising an additional component, the amount of the first alkaline earth metal oxide, when the total mass of the composite oxide carrier is 100% by mass, may be 90% by mass or less, 85% by mass or less, 80% by mass or less, 75% by mass or less, or 70% by mass or less.

The amount of zirconia when zirconium constitutes the composite oxide with another metal is an amount expressed as the amount of zirconium atoms in the composite oxide in terms of zirconia (ZrO₂).

The composite oxide may comprise alumina. By including alumina, which has high heat resistance, in the composite oxide, an effect of preventing deterioration due to heat can be obtained in the composite oxide. The alumina may be present as a single type of alumina, or may be present as a composite oxide with another metal oxide, for example, a rare earth element oxide other than ceria.

The amount of alumina in the composite oxide, when the total mass of the composite oxide carrier is 100% by mass, may be 5% by mass or greater, 10% by mass or greater, 15% by mass or greater, 20% by mass or greater, or 25% by mass or greater, from the viewpoint of sufficiently demonstrating the above effect. In order to benefit from the composite oxide comprising an additional component, the amount of the first alkaline earth metal oxide, when the total mass of the composite oxide carrier is 100% by mass, may be 50% by mass or less, 40% by mass or less, 30% by mass or less, 20% by mass or less, 10% by mass or less, or 5% by mass or less, or may be 0% by mass.

The alumina amount when alumina constitutes the composite oxide with another metal is an amount expressed as the amount of aluminum atoms in the composite oxide in terms of alumina (Al₂O₃).

### <Second alkaline earth metal oxide>

In the exhaust gas purification catalyst of the present invention, a second alkaline earth metal oxide is supported on the composite oxide carrier as described above. The second alkaline earth metal oxide is considered to function as storage sites for NOx.

The second alkaline earth metal oxide may be one or more selected from the group consisting of magnesium oxide, barium oxide, and strontium oxide. In particular, the second alkaline earth metal oxide may be barium oxide or strontium oxide.

The second alkaline earth metal oxide may be supported on particles. The particle size of the second alkaline earth metal oxide, as a number-average value of primary particle sizes calculated from XRD, may be 10 nm or more, 15 nm or more, 20 nm or more, or 25 nm or more, and may be 50 nm or less, 45 nm or less, 40 nm or less, or 35 nm or less.

The supported amount of the second alkaline earth metal oxide, when the mass of the composite oxide carrier is 100% by mass, may be 0.5% by mass or greater, 1.0% by mass or greater, 2.0% by mass or greater, 3.0% by mass or greater, 4.0% by mass or greater, 5.0% by mass or greater, or 6.0% by mass or greater, from the viewpoint of ensuring a sufficient adsorption amount of NOx.

Even if the supported amount of the second alkaline earth metal oxide is increased, the adsorption amount of NOx does not increase indefinitely. Although the reason therefor is not clear, it is considered to be related to an increase in free second alkaline earth metal oxide unsupported on the composite oxide carrier when the amount of the second alkaline earth metal oxide is excessively large. In other words, even if NOx is adsorbed on the composite oxide carrier having an increased number of adsorption sites, since NOx cannot be transferred to the free second alkaline earth metal oxide, there is presumably a limit to the adsorption amount of NOx.

When the supported amount of the second alkaline earth metal oxide is excessively large, the adsorption amount of NOx may actually be impaired. When the second alkaline earth metal oxide is excessively increased, it is presumed that a large portion of the surfaces of the composite oxide is covered by the second alkaline earth metal oxide, interfering with contact between the composite oxide and NOx and thereby decreasing the NOx adsorption amount of the material as a whole.

By excessively increasing the supported amount of the second alkaline earth metal, heat resistance of the composite oxide may be impaired.

From the above viewpoints, the supported amount of the second alkaline earth metal oxide, when the mass of the composite oxide carrier is 100% by mass, may be 25% by mass or less, 20% by mass or less, 15% by mass or less, 12% by mass or less, 10% by mass or less, or 8% by mass or less.

### <Noble metal>

In the exhaust gas purification catalyst of the present invention, a noble metal may be further supported on the above composite oxide carrier with the second alkaline earth metal oxide. When a noble metal is supported on the composite oxide carrier, an effect of further increasing the adsorption amount of NOx can be obtained. This is presumably because the noble metal functions as storage sites for NOx.

The noble metal may be one or more selected from the group consisting of platinum (Pt), palladium (Pd), and rhodium (Rh).

The particle size of the noble metal particles, as an average value of particle sizes of the noble metal particles calculated from a CO pulse method, may be 0.7 nm or more or 3 nm or more, and may be 100 nm or less or 50 nm or less.

In order to sufficiently demonstrate an effect of increased NOx adsorption amount, the supported amount of the noble metal, when the mass of the composite oxide carrier is 100% by mass, may be 0.1% by mass or greater, 0.3% by mass or greater, 0.5% by mass or greater, 0.7% by mass or greater, or 1.0% by mass or greater. However, when the supported amount of the noble metal is excessively increased, the adsorption amount of NOx proportional to the supported amount is not necessarily increased. Therefore, in consideration of manufacturing cost vs. effect of the obtained exhaust gas purification catalyst, the supported amount of the noble metal, when the mass of the composite oxide carrier is 100% by mass, may be 15% by mass or less, 10% by mass or less, 8% by mass or less, 5% by mass or less, 3% by mass or less, 2% by mass or less, or 1% by mass or less.

### <<Manufacturing method of exhaust gas purification catalyst>>

As long as the exhaust gas purification catalyst of the present invention comprises the above configuration, the manufacturing method thereof is not limited.

The exhaust gas purification catalyst of the present invention may be manufactured by, for example, a method comprising
manufacturing a composite oxide carrier comprising an OSC material and a first alkaline earth metal oxide, and
supporting a second alkaline earth metal oxide on the obtained composite oxide carrier.

In the exhaust gas purification catalyst of the present invention, the manufacturing method of the exhaust gas purification catalyst when a second alkaline earth metal oxide and a noble metal are supported on the composite oxide carrier may be a method further comprising supporting the noble metal on the composite oxide carrier.

The manufacture of the composite oxide carrier may be carried out by, for example, a coprecipitation method. Specifically, the method may be carried out by drying and baking a precipitate obtained by adding a suitable precipitant to a liquid mixture (preferably an aqueous solution) comprising a precursor of the OSC material, a precursor of the first alkaline earth metal oxide, and as needed, a precursor of an optional component, followed by pulverization and classification.

As each of the precursor of the OSC material, the precursor of the first alkaline earth metal oxide, and the precursor of the optional component, a nitrate, a sulfate, a hydrochloride, or an acetate of a desired metal may be used. The precipitant may be an alkali, for example, sodium hydroxide, potassium hydroxide, or ammonium hydroxide, and may be used as a solution thereof, preferably an aqueous solution.

Drying and baking of the precipitate and pulverization and classification of the baked product may each be carried out by a known method or a method appropriately modified therefrom by a person skilled in the art.

Supporting of a second alkaline earth metal oxide on the composite oxide carrier may be carried out by bringing a precursor of the second alkaline earth metal oxide into contact with the composite oxide carrier in a suitable liquid medium, preferably water, and then drying and baking the recovered solid content. As the precursor of the second alkaline earth metal oxide, a nitrate, a sulfate, a hydrochloride, or an acetate of a desired alkaline earth metal oxide may be used.

Supporting of a noble metal on the composite oxide carrier may be carried out by bringing a precursor of the noble metal into contact with the composite oxide carrier in a suitable liquid medium, preferably water, and then drying and baking the recovered solid content. As the precursor of the noble metal, a nitrate, a sulfate, a hydrochloride, or an acetate of a desired noble metal may be used.

The supporting of the noble metal on the composite oxide carrier may be carried out before or after the supporting of the second alkaline earth metal oxide on the composite oxide carrier, or may be carried out simultaneously with the supporting of the second alkaline earth metal oxide on the composite oxide carrier.

The supporting of the noble metal and the supporting of the second alkaline earth metal oxide on the composite oxide carrier may be carried out by the following method when carried out simultaneously. For example, the supporting may be carried out by bringing a precursor of the second alkaline earth metal oxide and a precursor of the noble metal into contact with the composite oxide carrier in a suitable liquid medium, preferably water, and then drying and baking the recovered solid content.

In the above description, drying and baking of the solid content may each be carried out by a known method or a method appropriately modified therefrom by a person skilled in the art.

### «Exhaust gas purification catalytic device»

In another aspect, the present invention provides an exhaust gas purification catalytic device.

The exhaust gas purification catalytic device of the present invention comprises
a substrate and a coating layer on the substrate, wherein
the coating layer comprises the exhaust gas purification catalyst of the present invention described above.

### <Substrate>

The substrate may be appropriately selected according to the type of substrate of the desired exhaust gas purification catalytic device. For example, a straight-flow-type or wall-flow-type honeycomb substrate composed of a material such as cordierite, SiC, stainless steel, or inorganic oxide particles may be used.

### <Coating layer>

The coating layer of the exhaust gas purification catalytic device of the present invention comprises the exhaust gas purification catalyst of the present invention.

### <Optional component>

The coating layer of the exhaust gas purification catalytic device of the present invention may comprise an optional component, as needed, in addition to the exhaust gas purification catalyst of the present invention. The optional component may be, for example, an inorganic oxide, a noble metal, or a binder.

### «Manufacturing method of exhaust gas purification catalytic device»

The exhaust gas purification catalytic device of the present invention may be manufactured by a known method or a method appropriately modified therefrom by a person skilled in the art, in addition to containing the exhaust gas purification catalyst of the present invention in a coating layer.

The exhaust gas purification catalytic device of the present invention may be manufactured by, for example, coating a coating liquid comprising the exhaust gas purification catalyst of the present invention and an optional component or a precursor thereof on a substrate, followed by baking.

### EXAMPLES

### <<Example 1>>

### 1. Preparation of exhaust gas purification catalyst

### 1-1. Preparation of composite oxide carrier

Zirconium oxynitrate, cerium nitrate, aluminum nitrate, neodymium nitrate, lanthanum nitrate, and magnesium acetate (a precursor of the first alkali metal oxide) were used as raw materials for the composite oxide carrier and were dissolved in pure water in the oxide-equivalent mass ratios listed in Table 3 to obtain an acidic mixed solution. A sodium hydroxide aqueous solution was added to the mixed solution until the pH reached 7, and a coprecipitation operation was carried out to obtain a precipitate. The precipitate was collected by filtration, sufficiently washed with pure water, dried in air at 250 °C for 8 h, and then baked in air at 500 °C for 2 h to obtain a baked product. The obtained baked product was pulverized in an agate mortar and classified, whereby a powdered composite oxide carrier having a particle size range of 2 to 10 µm was obtained.

### 1-2. Supporting of second alkaline earth metal oxide (preparation of exhaust gas purification catalyst)

The powdered composite oxide carrier obtained above was added to an aqueous solution obtained by dissolving magnesium acetate as a raw material compound of the second alkaline earth metal oxide in pure water, and the mixture was thoroughly stirred to form a suspension. The use amount of magnesium acetate was an amount such that the oxide-equivalent mass was 4 parts by mass based on 100 parts by mass of the composite oxide carrier (supported amount of 4% by mass). The obtained suspension was dried in air at 250 °C for 8 h and then baked in air at 500 °C for 2 h to obtain a baked product, which was pulverized in an agate mortar and passed through a 500-µm mesh, whereby an exhaust gas purification catalyst was prepared.

The primary particle size of the supported second alkaline earth metal oxide (MgO) particles calculated from XRD of the obtained exhaust gas purification catalyst was 10 to 40 nm.

### 2. NO adsorption test

About 2 g of the exhaust gas purification catalyst prepared as described above was precisely weighed and then loaded into a fixed-bed flow-type adsorption testing apparatus, and a NO adsorption test was carried out at 200 °C using a model gas.

The NO adsorption test was carried out in the catalyst bed temperature and gas composition sequences shown in Tables 1 and 2, and the cumulative amount of NH₃ recovered in the final desorption step was converted to NO₂ and calculated as the NO₂ adsorption amount (mg/g-cat) per unit mass of used catalyst. The results are shown in Table 3.

### «Examples 2 to 6 and Comparative Examples 1 to 3»

### 1. Preparation of exhaust gas purification catalyst

### 1-1. Preparation of composite oxide carrier

Except that the blending amounts of raw materials were adjusted so that the composite oxide carrier compositions were as shown in Table 3, composite oxide carriers were prepared in the same manner as in Example 1.

### 1-2. Supporting of second alkaline earth metal (preparation of exhaust gas purification catalyst)

Except that raw material compounds for the alkaline earth metal oxides indicated in Table 3 were used in place of magnesium acetate, a second alkaline earth metal oxide was supported on a composite oxide carrier to prepare an exhaust gas purification catalyst in the same manner as in Example 1. For the use amount of the raw material compound for the second alkaline earth metal oxide, the oxide-equivalent supported amount was the amount indicated in Table 3. The following raw material compounds were used, in accordance with the type of alkaline earth metal.
Mg: magnesium acetate
Ba: barium acetate
Sr: strontium nitrate

### 2. NO adsorption test

NO adsorption tests were carried out in the same manner as in Example 1, using the exhaust gas purification catalysts prepared as described above. The results are shown in Table 3.

### [Table 1]

**Table 1.**

| | Reduction step | | N₂ purge step | Adsorption step | N₂ purge step | Desorption step |
|---|---|---|---|---|---|---|
| Sequence number | 1 | 2 | 3 | 4 | 5 | 6 |
| Temperature | room temperature → 500 °C | 500 °C | 500 → 200 °C | 200 °C | 200 °C | 200 → 500 °C |
| Temperature change rate | 35 °C/min | - | -35 °C/min | - | - | 35 °C/min |
| Time | 820 s | 30 s | 514 s | 600 s | 240 s | 514 s |
| Gas composition | A | A | B | C | B | A |

### [Table 2]

**Table 2.**

| Gas composition | Flow rate (NL/min) | | | |
|---|---|---|---|---|
| | NO | H₂ | N₂ | Total |
| A | 0 | 0.149 | 7.851 | 8.000 |
| B | 0 | 0 | 8.000 | 8.000 |
| C | 0.306 | 0 | 7.694 | 8.000 |

### [Table 3]

**Table 3.**

| | Composite oxide carrier composition [wt%] | | | | | Second alkaline earth metal oxide supported amount [wt%] | | | NO adsorption amount [mg/g-cat] |
|---|---|---|---|---|---|---|---|---|---|
| | ZrO₂ | CeO₂ | Nd₂O₃ | La₂O₃ | MgO*⁾ | MgO | BaO | SrO | |
| Example 1 | 71.0 | 21.0 | 5.3 | 1.7 | 1.0 | 4.0 | 0 | 0 | 364 |
| Example 2 | 69.0 | 21.0 | 5.3 | 1.7 | 3.0 | 2.0 | 0 | 0 | 289 |
| Example 3 | 69.0 | 21.0 | 5.3 | 1.7 | 3.0 | 0 | 2.0 | 0 | 274 |
| Example 4 | 69.0 | 21.0 | 5.3 | 1.7 | 3.0 | 0 | 0 | 2.0 | 377 |
| Example 5 | 66.0 | 21.0 | 5.3 | 1.7 | 6.0 | 4.0 | 0 | 0 | 360 |
| Example 6 | 66.0 | 21.0 | 5.3 | 1.7 | 6.0 | 14.0 | 0 | 0 | 240 |
| Comparative Example 1 | 67.0 | 21.0 | 5.3 | 1.7 | 5.0 | 0.0 | 0 | 0 | 233 |
| Comparative Example 2 | 72.0 | 21.0 | 5.3 | 1.7 | 0 | 5.0 | 0 | 0 | 184 |
| Comparative Example 3 | 72.0 | 21.0 | 5.3 | 1.7 | 0 | 0 | 2.0 | 0 | 213 |

| | | | | | | | | | |
|---|---|---|---|---|---|---|---|---|---|
| *) first alkaline earth metal oxide | | | | | | | | | |

From the results shown in Table 3, the following was understood.

In the exhaust gas purification catalysts of Comparative Example 1, in which an alkaline earth metal was contained in a composite oxide carrier and no alkaline earth metal was supported on the composite oxide carrier, and of Comparative Examples 2 and 3, in which no alkaline earth metal was contained in a composite oxide carrier and an alkaline earth metal was supported on the composite oxide carrier, the NO adsorption amounts were small.

In the exhaust gas purification catalysts of Examples 1 to 6, in which a first alkaline earth metal was contained in a composite oxide carrier and a second alkaline earth metal was supported on the composite oxide carrier, increased NO adsorption amounts were exhibited.

Presumably, this was a result of the cooperation between the first alkaline earth metal oxide present in the composite oxide carrier and the second alkaline earth metal oxide supported on the composite oxide carrier, whereby NO was adsorbed by the exhaust gas purification catalyst in a state where the NO was oxidized to NO₂ and/or NO₃.

Specifically, it is considered that the first alkaline earth metal oxide in the composite oxide carrier promoted the release of oxygen from the OSC material (ceria) in the composite oxide carrier, facilitating NO to be oxidized to NO₂ and/or NO₃⁻. Presumably, the second alkaline earth metal supported on the composite oxide carrier could adsorb the oxidized NO (NO₂ and/or NO₃⁻) with high efficiency.

In the exhaust gas purification catalyst of Comparative Example 1, oxidation of NO to NO₂ and/or NO₃ was promoted by the alkaline earth metal oxide in the composite oxide carrier. However, since there was no alkaline earth metal oxide supported on the composite oxide carrier, the adsorption amount of oxidized NO was presumably small.

The exhaust gas purification catalysts of Comparative Examples 2 and 3 each comprised a supported alkaline earth metal oxide on a composite oxide carrier, and thus potentially had the ability to adsorb oxidized NO. However, since no alkaline earth metal oxide was contained in the composite oxide carrier, it is considered that oxidation of NO did not proceed and the adsorption amounts of NO were thus small.

### «Examples 7 to 9 and Comparative Example 4»

### 1. Preparation of exhaust gas purification catalyst

### 1-1. Preparation of composite oxide carrier

Except that the blending amounts of raw materials were adjusted so that the composite oxide carrier compositions were as indicated in Table 4, composite oxide carriers were prepared in the same manner as in Example 1. In Example 10, aluminum nitrate was additionally used as a raw material for the composite oxide carrier.

### 1-2. Supporting of noble metal and second alkaline earth metal oxide (preparation of exhaust gas purification catalyst)

Except that the noble metal (PGM) raw material compounds indicated in Table 4 were used in addition to magnesium acetate, a noble metal and a second alkaline earth metal oxide were supported on a composite oxide carrier in the same manner as in Example 1 to prepare an exhaust gas purification catalyst. For the use amount of the noble metal raw material compound, the metalequivalent supported amount was the amount indicated in Table 4. The following raw material compounds were used, in accordance with the type of noble metal.
Pd: palladium nitrate
Rh: rhodium nitrate
Pt: platinum (II) nitrate

### 2. NO adsorption test

NO adsorption tests were carried out in the same manner as in Example 1, using the exhaust gas purification catalysts prepared as described above. The results are shown in Table 4.

### [Table 4]

**Table 4.**

| | Composite oxide carrier composition [wt%] | | | | | | Noble metal | | Second alkaline earth metal oxide supported amount [wt%] | | | NO adsorption amount [mg/g-cat] |
|---|---|---|---|---|---|---|---|---|---|---|---|---|
| | ZrO₂ | CeO₂ | Al₂O₃ | Nd₂O₃ | La₂O₃ | MgO*⁾ | Type | Supported amount [wt%] | MgO | BaO | SrO | |
| Example 7 | 66.0 | 21.0 | 0 | 5.3 | 1.7 | 6.0 | Pd | 1.0 | 4.0 | 0 | 0 | 1015 |
| Example 8 | 66.0 | 21.0 | 0 | 5.3 | 1.7 | 6.0 | Rh | 1.0 | 4.0 | 0 | 0 | 3384 |
| Example 9 | 66.0 | 21.0 | 0 | 5.3 | 1.7 | 6.0 | Pt | 1.0 | 4.0 | 0 | 0 | 1389 |
| Example 10 | 36.0 | 21.0 | 30.0 | 5.3 | 1.7 | 6.0 | Pd | 1.0 | 4.0 | 0 | 0 | 1708 |
| Comparative Example 4 | 72.0 | 21.0 | 0 | 5.3 | 1.7 | 0 | Pd | 1.0 | 0.0 | 0 | 0 | 875 |

| | | | | | | | | | | | | |
|---|---|---|---|---|---|---|---|---|---|---|---|---|
| *) first alkaline earth metal oxide | | | | | | | | | | | | |

From the results shown in Table 4, the following is understood.

It is generally known that when catalytic noble metal particles are supported on a composite oxide carrier, adsorption amount of NO increases. In fact, the exhaust gas purification catalyst of Comparative Example 4, in which catalytic noble metal particles were supported on a composite oxide carrier, exhibited a relatively large NO adsorption amount.

The exhaust gas purification catalysts of Examples 7 to 10, in which a first alkaline earth metal was contained in a composite oxide carrier and a second alkaline earth metal and a catalytic noble metal were supported on the composite oxide carrier, exhibited a significantly increased NO adsorption amount compared to the exhaust gas purification catalysts of the Comparative Examples.

### «Analysis Examples»

For the exhaust gas purification catalyst obtained in each of Example 1 and Comparative Examples 1 to 3, the distribution of alkaline earth metals in the catalyst was examined by elemental analysis via electron probe microanalysis (EPMA). The measurement conditions are as follows.
Acceleration voltage: 20 kV
Probe current: 100 nA
Collection time: 20 ms
Resolution: 256 × 256 pixels
Sample thermal history: none (fresh product measured immediately after preparation) Observation magnification: 500×

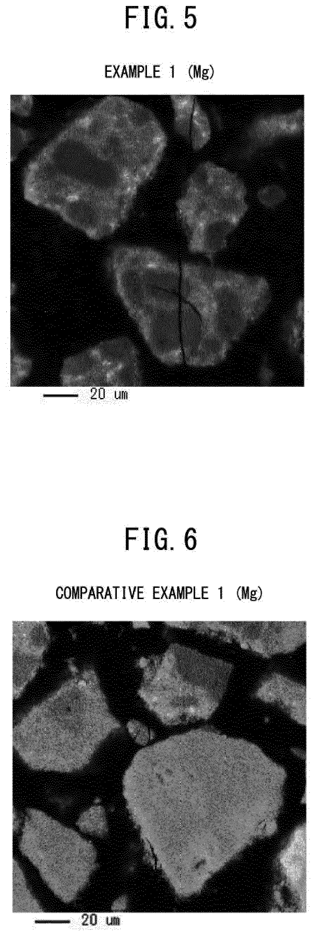

The resulting alkaline earth metal element mappings are shown in FIG. 5 to FIG. 8.

FIG. 5 is a Mg mapping obtained by EPMA analysis of the exhaust gas purification catalyst of Example 1. Referring to FIG. 5, it is found that Mg is present both at the inner portion and on the surface of the composite oxide carrier. It can be confirmed that Mg on the composite oxide carrier surface is in a very good state of dispersibility and evenly supported on the surface of the composite oxide carrier, and there is almost no free Mg from the composite oxide carrier.

FIG. 6 is a Mg mapping obtained by EPMA analysis of the exhaust gas purification catalyst of Comparative Example 1. In FIG. 6, Mg is present only at the inner portion of the composite oxide carrier.

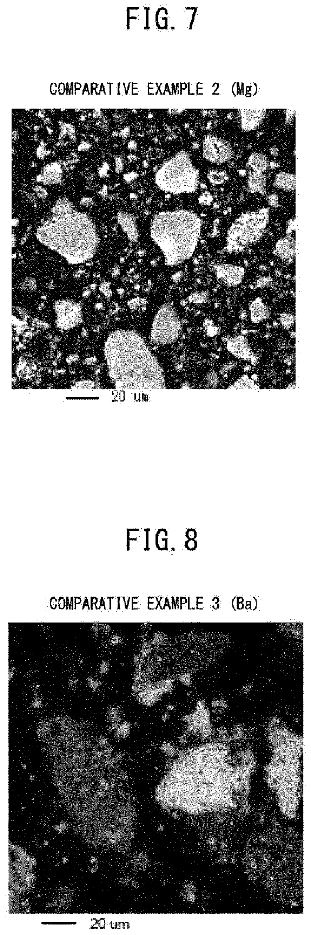

FIG. 7 is a Mg mapping obtained by EPMA analysis of the exhaust gas purification catalyst of Comparative Example 2. In FIG. 7, Mg is present only at the outer portion of the composite oxide carrier. It can be confirmed that Mg is segregated on the surface of the composite oxide carrier in an aggregated state and free from the composite oxide carrier.

FIG. 8 is a Ba mapping obtained by EPMA analysis of the exhaust gas purification catalyst of Comparative Example 3. In FIG. 8, Ba is present only at the outer portion of the composite oxide carrier. It can be confirmed that Ba is segregated on the surface of the composite oxide carrier in an aggregated state and free from the composite oxide carrier.

From the comparison between FIG. 5 regarding the exhaust gas purification catalyst of Example 1 and FIGS. 7 and 8 regarding the exhaust gas purification catalysts of Comparative Examples 2 and 3, it was confirmed that the presence of an alkaline earth metal in the composite oxide carrier improves the dispersibility of supported alkaline earth metal and suppresses generation of free alkaline earth metal.

### REFERENCE SIGNS LIST

100, 200, 300, 400 exhaust gas purification catalyst
110, 210, 310 composite oxide carrier
111, 211, 411 OSC material
112, 212, 412 first alkaline earth metal oxide
120, 220, 320 second alkaline earth metal oxide
230 noble metal

## Claims

1. An exhaust gas purification catalyst, comprising
a composite oxide carrier comprising an OSC material and a first alkaline earth metal oxide, and
a second alkaline earth metal oxide supported on the composite oxide carrier.

2. The exhaust gas purification catalyst according to claim 1, wherein the first alkaline earth metal oxide is magnesium oxide.

3. The exhaust gas purification catalyst according to claim 1 or 2, wherein the second alkaline earth metal oxide is one or more selected from the group consisting of magnesium oxide, barium oxide, and strontium oxide.

4. The exhaust gas purification catalyst according to any one of claims 1 to 3, wherein the OSC material comprises a cerium-zirconium composite oxide.

5. The exhaust gas purification catalyst according to any one of claims 1 to 4, wherein the composite oxide carrier further comprises alumina.

6. The exhaust gas purification catalyst according to any one of claims 1 to 5, wherein an amount of the first alkaline earth metal oxide, when a total mass of the composite oxide carrier is 100% by mass, is 0.1% by mass or greater and 20% by mass or less.

7. The exhaust gas purification catalyst according to any one of claims 1 to 6, wherein a supported amount of the second alkaline earth metal oxide, when a mass of the composite oxide carrier is 100% by mass, is 0.5% by mass or greater and 25% by mass or less.

8. The exhaust gas purification catalyst according to any one of claims 1 to 7, further comprising a noble metal supported on the composite oxide carrier.

9. The exhaust gas purification catalyst according to claim 8, wherein the noble metal is one or more selected from the group consisting of platinum, palladium, and rhodium.

10. The exhaust gas purification catalyst according to claim 8 or 9, wherein a supported amount of the noble metal, when a mass of the composite oxide carrier is 100% by mass, is 0.1% by mass or greater and 15% by mass or less.

11. An exhaust gas purification catalytic device, comprising a substrate and a coating layer on the substrate, wherein
the coating layer comprises the exhaust gas purification catalyst according to any one of claims 1 to 10.
